# EUROPEAN PATENT APPLICATION

(11) **EP 4 541 550 A1**
(43) Date of publication of application: **23.04.2025**
(21) Application number: 24203286.0
(22) Date of filing: 27.09.2024
(51) Int. Cl.: B29C 45/73, B29C 35/00

(54) **THERMAL CONTROL SYSTEM AND METHOD**

(30) Priority: 16.10.2023 IT 202300021540
(71) Applicant: Piovan S.P.A., 30036 Santa Maria di Sala (VE) (IT)
(72) Inventor: BELLIO, Enrico, 31050 Ponzano V.to (IT); CAPPELLINI, Davide, 26029 Soncino (CR) (IT); GRAVINA, Marco, 30033 Noale (VE) (IT); RONZONE, Riccardo, 30174 Venezia (IT)
(74) Representative: Luppi Intellectual Property S.r.l.

(57) **Abstract**

A system is disclosed for circulating a control fluid for controlling the temperature in an industrial apparatus, in particular in an apparatus for injection moulding plastics, with a delivery line (2) of the control fluid in fluid communication with at least one cavity near at least one element of the industrial apparatus, with a return line (1) of the control fluid, and with a multi-stage centrifugal pump (5) , with a number of stages greater than or equal to three, to circulate the control fluid from the return line (1) to the delivery line (2).

## Description

### Background of the invention

The invention relates to a method and/or a system of thermal control, in particular for controlling the operating temperatures in an industrial apparatus by circulating a control fluid.

Specifically, but not exclusively, the invention can be applied in an apparatus for machining plastics, in particular in the context of a moulding apparatus, as, for example, in an element (in particular, a mould) of an apparatus for injection moulding plastics.

A circulating device for circulating a thermal fluid is commonly used in an industrial environment to control the operating temperatures of moulding apparatuses.

Patent publications US 8,114,321 B2 and US 8,501,060 B2 show some embodiments of circulating devices of this type.

Nevertheless, there is room for improvement of various aspects of prior-art control systems that operate by circulating thermal fluid.

Firstly, it is desirable to improve the efficiency of the heat exchange actuated by circulating a thermal fluid.

Secondly, it is desirable for the control of the operating temperatures in an industrial apparatus to be able to adapt to the industrial apparatus even without knowing the features thereof in detail.

### Summary of the invention

One object of the invention is to provide an alternative solution to those of the prior art for thermal control of an industrial apparatus.

One object of the invention is to propose a solution that is able to overcome one or more of the aforesaid limits and drawbacks of the prior art.

One advantage is to make available a system and/or a method for the thermal control of an industrial apparatus so as to considerably reduce the cooling time of the apparatus or of a part thereof.

One advantage is to devise a system and/or a method for the thermal control of an industrial apparatus that is able to self-adapt to the actual features of the apparatus, even without knowing these features.

One advantage is to permit circulation of a thermal control fluid with a turbulent flow regime rather than a laminar flow regime, with a resulting increase in the head exchange coefficient and thus of the cooling efficacy.

One advantage is to reduce considerably the duration of an injection cycle in an apparatus for injection moulding plastics.

Such objects and advantages, and still others, are achieved by a system and/or a method according to one or more of the claims set out below.

In one embodiment, a system for circulating a control fluid, suitable for controlling the operating temperature in an industrial apparatus, comprises a delivery line of the control fluid in fluid communication with at least one cavity near at least one element of the industrial apparatus, a return line of the control fluid, and a multi-stage centrifugal pump configured to circulate the control fluid from the return line to the delivery line.

The multi-stage centrifugal pump may comprise, in particular, a number of impellers greater than or equal to three and/or a number of impellers less than or equal to nine.

The impellers of the multi-stage centrifugal pump may be arranged, in particular, on the same axis of rotation as the pump.

The multi-stage centrifugal pump may be controlled, in particular, at a delivery pressure greater than 3 barg and/or less than 20 barg, or greater than 3 barg and/or less than 15 barg, or comprised between 3 and 20 barg, or comprised between 3 and 15 barg.

The multi-stage centrifugal pump may be controlled, in particular, at a rotation speed greater than 300 revolutions per minute and/or less than 5000 revolutions per minute.

### Brief description of the drawings

The invention can be better understood and implemented with reference to the appended drawings that illustrate some embodiments thereof by way of non-limiting example in which:
- Figure 1 is a drawing of a first embodiment of a system of thermal control devised according to the present invention;
- Figure 2 is a drawing of a second embodiment of a system of thermal control devised according to the present invention;
- Figure 3 is a drawing of a third embodiment of a system of thermal control devised according to the present invention, in which the control fluid is mixed directly with the cooling fluid.

### Detailed description

For the sake of simplicity, identical elements of different embodiments have been indicated by the same numbering.

With reference to the aforesaid figures, a circulation system for circulating a control fluid (or thermal fluid) for controlling the temperature for a moulding apparatus has been indicated overall by 100.

The control fluid may comprise, in particular, water.

The circulation system 100 comprises a control circuit for circulating the control fluid with at least one return line 1 for the return of the control fluid returning from an element of a moulding apparatus (for example the return from a mould of an injection press) and with at least one delivery line 2 for supplying the control fluid to an element of the moulding apparatus (for example supplying to the mould).

The control fluid circuit may be, in particular, in fluid communication with at least one cooling cavity arranged near at least one element of the moulding apparatus (for example, near the mould).

The circulation system 100 may comprise, in particular, one or more heaters 3 for heating the control fluid and/or one or more heat exchangers 4 operationally associated with the control fluid.

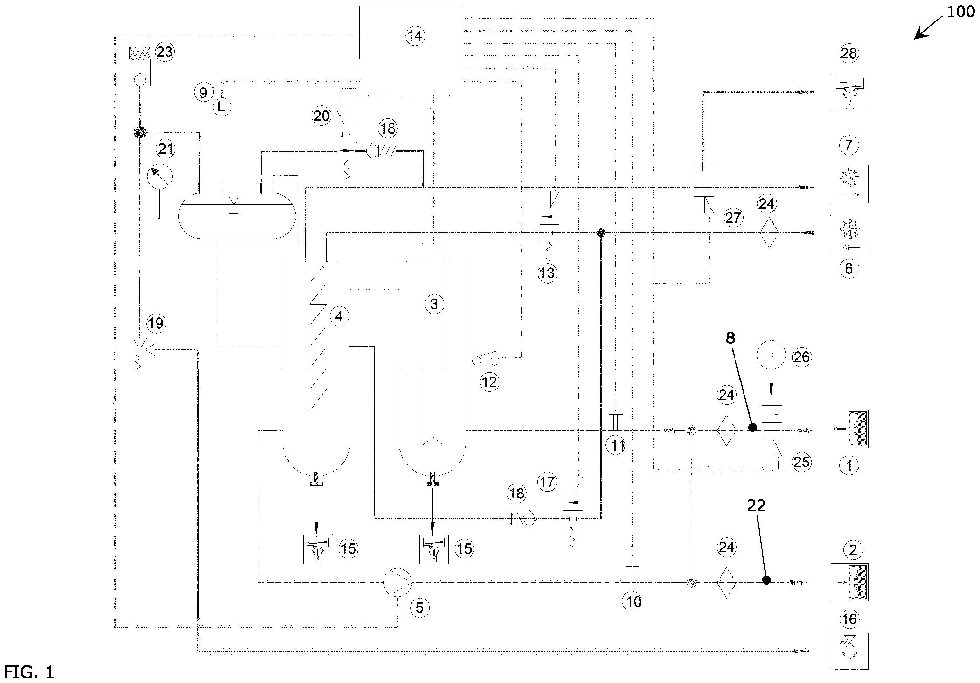

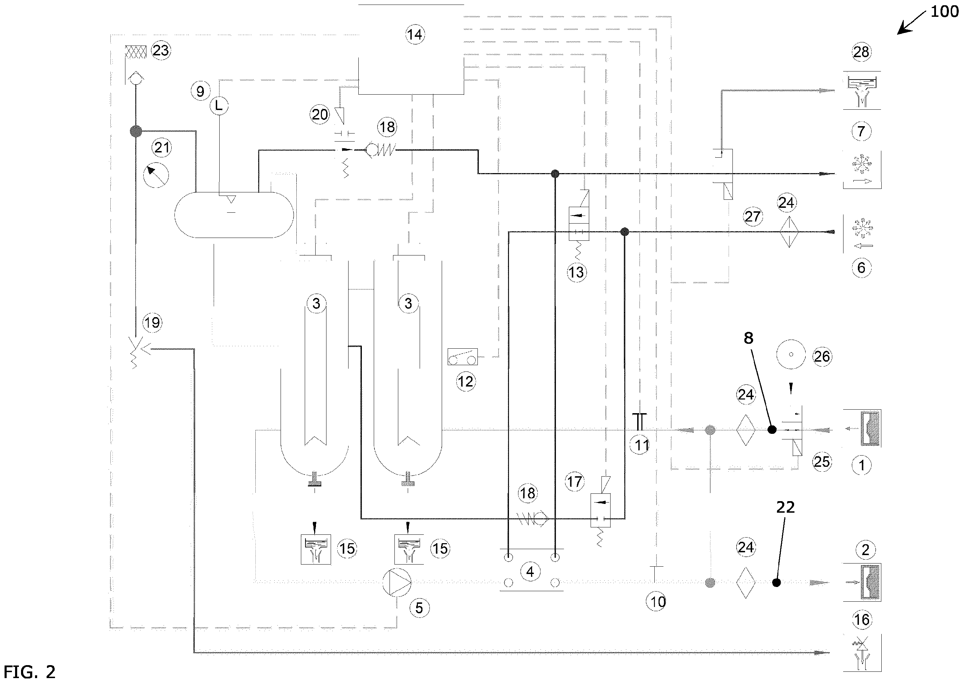

The heat exchanger 4 may perform, in particular, cooling of the control fluid. The heat exchanger 4 may be, in particular, of the coil type (Figure 1), or of the plate type (Figure 2), or of yet another type.

The circulation system 100 comprises a pump 5 for circulating the control fluid in the control circuit. The pump 5 may comprise, in particular, a pump of the non-reversible type. The pump 5 is controlled by a control unit that manages the circulation system 100.

The circulation system 100 may comprise, in particular, a cooling circuit with an inlet 6 for a cooling fluid (for example, water) and an outlet 7 for the cooling fluid.

The circulation system 100 may comprise, in particular, sensor means 8 arranged on the return line 1 of the control fluid to detect one or more features of the control fluid. The sensor means 8 may comprise, in particular, a control fluid flow rate sensor and/or a control fluid pressure sensor and/or a control fluid temperature sensor.

The sensor means 8 may be arranged for sending signals to a control unit that manages the circulation system 100.

The circulation system 100 may comprise, in particular, a level sensor 9 arranged for detecting the level in a tank connected to the control fluid circuit. The level sensor 9 may be arranged for sending signals to a control unit that manages the circulation system 100.

The circulation system 100 may comprise, in particular, a temperature sensor 10 arranged for detecting the temperature of the control fluid in the delivery line 2 and/or a temperature sensor 11 arranged for detecting the temperature of the control fluid in the return line 1.

The temperature sensors 10 and 11 may be arranged for sending signals to a control unit that manages the circulation system 100.

The circulation system 100 may comprise, in particular, at least one safety thermostat 12 operationally associated with at least one heater 3.

The thermostat 12 may be connected to a control unit that manages the circulation system 100.

The circulation system 100 may comprise, in particular, at least one cooling valve 13 arranged in a cooling fluid inlet line. The cooling valve 13 may be controlled by a control unit that manages the circulation system 100.

The circulation system 100 may comprise, in particular, a control unit 14 (which is electronic and programmable) that manages the circulation system 100. The control unit 14 is connected to the various sensors and actuators of the circulation system 100.

The circulation system 100 may comprise, in particular, at least one discharge 15 connected, for example, to the heater 3 and/or to the heat exchanger 4.

The circulation system 100 may comprise, in particular, an overflow and/or vent device 16 connected to a tank via an overflow and/or vent line. The tank may be, in particular, connected to the control fluid circuit.

The circulation system 100 may comprise, in particular, a filling valve 17 arranged on a filling line that leads away from the cooling fluid inlet line and which is connected to the heat exchanger 4 or to a heater 3.

The filling valve 17 may be controlled by the control unit 14.

The circulation system 100 may comprise, in particular, a one-way valve 18 arranged on the filling line.

The circulation system 100 may comprise, in particular, a safety valve 19 arranged on the overflow and/or vent line.

The circulation system 100 may comprise, in particular, a purge valve 20 arranged on a purge line arranged between a tank connected to the control fluid circuit and the outlet line of the cooling fluid.

The purge valve 20 may be controlled by the control unit 14.

It is possible to provide, in particular, a one-way valve 18 arranged on the purge line.

The circulation system 100 may comprise, in particular, a pressure sensor 21 arranged for measuring the pressure in a tank connected to the control fluid circuit.

The circulation system 100 may comprise, in particular, a pressure sensor 22 arranged for measuring the delivery pressure of the control fluid in the delivery line 2.

The circulation system 100 may comprise, in particular, a vacuum breaker valve 23 arranged on the overflow and/or vent line.

The circulation system 100 may comprise, in particular, a filter 24 (for example, a filter for retaining solids or intercepting impurities) arranged on the cooling fluid inlet line and/or on the return line 1 from the moulding apparatus and/or on the delivery line 2 to the moulding apparatus.

The circulation system 100 may comprise, in particular, a drain valve 25 (or a drain valve of the mould) arranged on the return line 1. The drain valve 25 may be, in particular, controlled by the control unit 14.

The drain valve 25 may be connected, in particular, to a compressed air inlet 26.

The circulation system 100 may comprise, in particular, an additional drain valve 27 (or additional drain valve of the mould) arranged on the outlet line 7 of the cooling fluid and connected to a drain 28.

It has been observed that using a multi-stage pump for generating a flow of the control fluid significantly improves the thermal performance of the circulation system 100.

In particular, using a multi-stage pump enables the cooling time of an injection mould to be reduced considerably.

It has also been established that very effective heat control is obtained by using a multi-stage pump, so that the circulation system 100 is able to self-adapt to the actual features of the mould, even without knowing these features, whatever the type of mould, in particular whatever the load loss due to the mould, i.e. the load loss linked to the presence of channels in the mould that even have a complex conformation.

In particular, it has been observed that using a multi-stage pump enables the circulation system 100 to operate with a turbulent rather than laminar regime, with a resulting increase in the heat exchange coefficient and thus the cooling efficacy of the mould.

In this regard, it is to be noted that in general the characteristic curve (load losses in function of the flow rate) of a pump can be known but in general the characteristic curve of the mould is not known.

As said, the multi-stage pump may have, in particular, a number of pumping stages greater than or equal to three, for example comprised between three and nine.

The number of pump stages may be chosen, in particular, so as to enable work at a rotation speed of the pump comprised between 300 and 5000 revolutions a minute.

The number of pump stages may be chosen, in particular, so as to enable working at a delivery pressure of the pump comprised between 3 and 20 barg (or between 3 and 15 barg) defined as a corresponding pressure present in the closed circuit, where the barg (bar gauge) is the difference between the pressure in bar in the closed circuit and the atmospheric pressure in bar.

The circulation system 100 may be, in some applications (typically in applications in which the temperature of the control fluid is greater than 90°C), of pressurized type, i.e. with relative pressure greater than 0 barg in the control circuit also in the absence of circulation of the control fluid.

In other applications (typically where the process temperature is less than 90°C), the circulation system 100 may be of atmospheric type, i.e. with relative pressure equal to 0 barg in the absence of circulation of the control fluid.

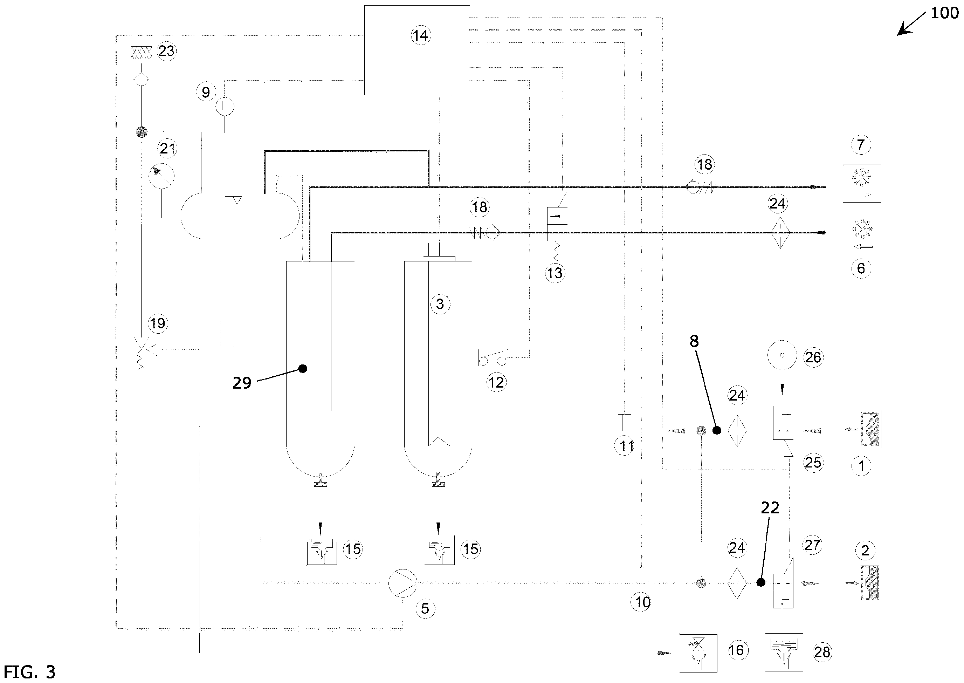

The circulation system 100 of atmospheric type may be provided with a system of direct injection cooling in which cooling involves the control fluid being mixed with the cooling fluid (see Figure 3). In this case, the circulation system 100 comprises a mixing zone 29 arranged in the control fluid circuit in which mixing with the cooling fluid occurs. The mixing zone 29 may comprise, in particular, a mixing chamber, or container, or point or line or circuit.

The control unit 14 may be configured, in particular, to control the rotation speed of the pump 5 so that the control fluid flow rate, measured, in particular, by a flow rate sensor of the sensor means 8, is maintained at a desired value (setpoint value).

The control unit 14 may be configured, in particular, to control the rotation speed of the pump 5 so that the control fluid pressure, measured, in particular, by a pressure sensor of the sensor means 8, is maintained at a desired value (setpoint value).

The control unit 14 may be configured, in particular, to control the rotation speed of the pump 5 so that the control fluid pressure, measured, in particular, by the pressure sensor 22 on the delivery line 2, is maintained at a desired value (setpoint value).

The control unit 14 may be configured, in particular, to control the rotation speed of the pump 5 so that a pressure difference between the delivery line 2 and the return line 1 of the control fluid, measured, in particular, by a pressure sensor of the sensor means 8 and by the pressure sensor 22 on the delivery line 2, is maintained at a desired value (setpoint value).

The control unit 14 may be configured, in particular, to control the rotation speed of the pump 5 so that a temperature difference between the delivery line 2 and the return line 1 of the control fluid, measured, in particular, by the temperature sensors 10 and 11, is maintained at a desired value (setpoint value).

The control unit 14 may be configured, in particular, to control the rotation speed of the pump 5 in function of the duration of a work cycle of the moulding apparatus (in particular, an injection cycle of the injection apparatus), so that it is possible, for example, to increase the rotation speed of the pump 5 if the duration of the work cycle increases, or set a given rotation speed of the pump 5 on the basis of a duration of the work cycle.

The control unit 14 may be configured, in particular, to control the pump 5 in function of the energy (mechanical and/or thermal) exerted on the mould in an injection cycle of the injection apparatus.

As has been seen, it is possible for the control of the circulation system 100 to be run in different ways (flow rate control, control of delivery and/or return pressure, control of delivery and/or return temperature, control of moulding cycle time, control of the power exchanged by the mould, etc). It is further possible to perform a check of combined type that takes account of two or more of the parameters used in the aforesaid control modes.

The control unit 14 may be configured to control the pump 5 in closed loop mode (i.e. with feedback), although it is possible to provide an open-loop control mode.

The control of the circulation system 100 may be set on the basis of the performance requested and/or on the dimension of the mould and/or the dimension of the moulding apparatus (for example the tonnage of the press) and/or the desired cooling temperature of the mould and/or of the type of polymer moulded, etc.

The setpoint values used to control the pump 5 may be set and/or modified so as to obtain relatively high turbulence of the flow of the control fluid.

The temperature of the control fluid in the control circuit can reach a value of about 90°C in the case of a non-pressurized circuit (atmospheric pressure) or up to about 140°C in the case of a pressurized circuit.

The method of cooling the control fluid may be direct exchange (with mixing) or with an exchanger to ensure separation of the fluids. The exchanger may be, for example, a plate or coil or yet another type of exchanger in function of the desired cooling power.

The control unit 14 may be configured to store the detected data on pressure and/or flow rate and/or rotation speed and/or type of moulding apparatus, to then generate a series of "work recipes", i.e. set point values for running subsequent thermal control cycles.

## Claims

1. Circulation system for circulating a control fluid for temperature control for a moulding apparatus, said system comprising: a control fluid delivery line (2) in fluid communication with at least one cavity that is proximate to at least one element of said moulding apparatus, a return line (1) of the control fluid returning from said moulding apparatus, and pumping means for circulating the control fluid from said return line (1) to said delivery line (2), **characterized in that** said pumping means comprises a multi-stage centrifugal pump (5).

2. System according to claim 1, wherein said multi-stage centrifugal pump (5) comprises a number of impellers greater than or equal to three.

3. System according to claim 1 or 2, wherein said multi-stage centrifugal pump (5) comprises a number of impellers greater than or equal to nine.

4. System according to any one of the preceding claims, wherein said impellers of said multi-stage centrifugal pump (5) are arranged on the same axis of rotation of said multi-stage centrifugal pump.

5. System according to any one of the preceding claims, comprising a control unit (14) configured to rotate said multi-stage centrifugal pump (5) at a rotation speed greater than 300 revolutions per minute.

6. System according to claim 5, wherein said control unit (14) is configured to rotate said multi-stage centrifugal pump (5) at a rotation speed less than 5000 revolutions per minute.

7. System according to any one of the preceding claims, comprising a control unit (14) configured to operate said multi-stage centrifugal pump (5) at a delivery pressure greater than 3 barg and/or less than 15 or 20 barg.

8. System according to any one of the preceding claims, comprising a control unit (14) configured to control a rotation speed of said multi-stage centrifugal pump (5) so as to maintain a control fluid flow rate at a desired value based on signals emitted by sensor means (8), in particular sensor means (8) arranged in said return line (1).

9. System according to any one of the preceding claims, comprising a control unit (14) configured to control a rotation speed of said multi-stage centrifugal pump (5) so as to maintain a control fluid pressure at a desired value based on signals emitted by sensor means (8) arranged in said return line (1), or based on signals emitted by a pressure sensor (22) arranged in said delivery line (2).

10. System according to any one of the preceding claims, comprising a control unit (14) configured to control a rotation speed of said multi-stage centrifugal pump (5) so as to maintain a control fluid pressure difference at a desired value based on signals emitted by sensor means (8) arranged in said return line (1) and by a pressure sensor (22) arranged in said delivery line (2).

11. System according to any one of the preceding claims, comprising a control unit (14) configured to control a rotation speed of said multi-stage centrifugal pump (5) so as to maintain a temperature difference of the control fluid at a desired value based on signals emitted by temperature sensors (10; 11).

12. System according to any one of the preceding claims, comprising: at least one heater (3) of the control fluid with at least one safety thermostat (12); at least one heat exchanger (4) or at least one mixing zone (29) configured to perform cooling of the control fluid; a cooling circuit with an inlet (6) for a cooling fluid and an outlet (7) for the cooling fluid; at least one cooling valve (13) controlled by a control unit (14) and arranged in a cooling fluid inlet line; a filling valve (17) controlled by said control unit (14) and arranged on a filling line which branches off from said cooling fluid inlet line and which is connected to said heat exchanger (4) or to a heater (3); a one-way valve (18) arranged on said filling line; and a drain valve (25) controlled by a control unit (14) and arranged on said return line (1), said drain valve (25) being connected to a compressed air inlet (26).

13. System according to any one of the preceding claims, comprising: a tank connected to the control fluid circuit; a level sensor (9) arranged to detect the level in said tank; an overflow and/or vent device (16) connected to said tank via an overflow and/or vent line; a safety valve (19) and/or a vacuum breaker valve (23) arranged on said overflow and/or vent line; a purge valve (20) controlled by a control unit (14) and arranged on a purge line arranged between said tank and a line of a cooling fluid circuit; e a one-way valve (18) arranged on said purge line.

14. Method for controlling temperature for a moulding apparatus by circulating a control fluid, said method making use of a circulation system according to any one of the preceding claims, wherein said multi-stage centrifugal pump (5) is rotated at a rotation speed greater than 300 revolutions per minute or comprised between 300 and 5000 revolutions per minute and at a delivery pressure greater than 3 barg and/or less than 20 barg, or greater than 3 barg and/or less than 15 barg.

15. Method according to claim 14, wherein a rotation speed of said multi-stage centrifugal pump (5) is controlled so as to maintain a flow rate of the control fluid, or a pressure of the control fluid, or a pressure difference of the control fluid at a desired value.
